# EUROPEAN PATENT APPLICATION

(11) **EP 1 844 649 A2**
(43) Date of publication of application: **17.10.2007**
(21) Application number: 07105909.1
(22) Date of filing: 11.04.2007
(51) Int. Cl.: A01K 1/00, E04D 13/17

(54) **Adjustable flow ventilation inlet for buildings with pitched roof**

(30) Priority: 12.04.2006 IT TO20060049
(71) Applicant: C.G.M. S.r.l., 12030 Monasterolo di Savigliano CN (IT)
(72) Inventor: MASSIMINO, Gianpiero, I-12038, SAVIGLIANO (Cuneo) (IT)
(74) Representative: Rondano, Davide

(57) **Abstract**

The adjustable flow ventilation inlet (20) is intended to be mounted on a pitched roof (10) of a building, in particular of a stable, to adjust air flow through an opening (18) provided in the roof (10). The inlet (20) comprises a frame (22) intended to be attached to the roof (10) around the opening (18) and a movable closing element (24) hinged (26) to the frame (22) so as to be able to rotate about a horizontal axis between a fully closed position and a fully open position. The movable closing element (24) has a bottom wall (32) which comprises a substantially flat base portion (32a) forming a closing free edge (36) arranged to abut against the frame (22) in the fully closed position, and a joining portion (32b) extending upwards from the base portion (32a) on the opposite side to the closing free edge (36). The closing element (24) is hinged to the frame (22) near a top edge of the joining portion (32b).

## Description

The present invention relates to an adjustable flow ventilation inlet for buildings with pitched roof, in particular for stables.

Ventilation inlets for stables are known, which consist basically of an orientable closing element formed by a flat flap which is hinged at an end thereof so as to be rotatable about a horizontal axis to adjust the air flow through the inlet. Such a known solution cannot be conveniently applied to stables with pitched roof, since the flap would be inclined downwards in the fully open position (maximum flow) and hence the air flow emitted through the inlet would be discharged directly towards the animals accommodated in the stable, with possible detrimental consequences for their health. In order to avoid to discharge the air downwards, the flap should be rotated at most by an angle approximately equal to the angle of inclination of the roof, so as to be parallel to the ground. However, in such a case the air flow through the inlet would obviously be lower than the flow obtainable with a higher opening degree.

It is therefore an object of the present invention to provide an adjustable flow ventilation inlet for buildings with pitched roof, in particular for stables, which is not affected by the drawback of the prior art discussed above, i.e. which allows the passage of an air flow of high flow rate (insofar as it is permitted by the size of the opening in which the inlet is installed) and of upward or at least horizontal orientation.

This object is fully achieved according to the present invention by virtue of a ventilation inlet having the characteristics defined in the characterizing part of independent claim 1.

Since the inlet comprises a frame, which is intended to be attached to a roof in the region of an opening provided therein, and a closing movable element, which is hinged to the frame so as to rotate about a horizontal axis between a fully closed position and a fully open position, wherein the movable element includes a substantially flat base portion forming a closing free edge and a joining portion extending upwards from the base portion on the opposite side to the closing free edge, and is articulated to the frame at an upper end region thereof, it is possible to obtain a fully open position in which the flat base portion of the movable element is arranged substantially horizontally and therefore does not direct the air flow downwards, and in which at the same time the maximum air flow which can pass through the opening is not limited by the encumbrance represented by the movable element.

Further advantageous features of the invention are indicated in the dependent claims.

The characteristics and the advantages of the invention will result from the following detailed description, given purely by way of non-limiting example with reference to the appended drawings, in which:
Figures 1 and 2 are axonometric views of an adjustable flow ventilation inlet according to a preferred embodiment of the invention;
Figures 3 is a cross-section view of a portion of a pitched roof in which a ventilation inlet according to Figures 1 and 2, shown in the fully closed position, is installed;
Figures 4 is a view similar to that of Figure 3, in which the ventilation inlet is disposed in the fully open position; and
Figures 5 is an axonometric view of a variant of embodiment of an adjustable flow ventilation inlet according to the invention.

In the description and the claims which follow, terms such as "upper" or "lower", "horizontal" and "vertical" are meant to refer to the assembled condition of the ventilation inlet on the roof of a building.

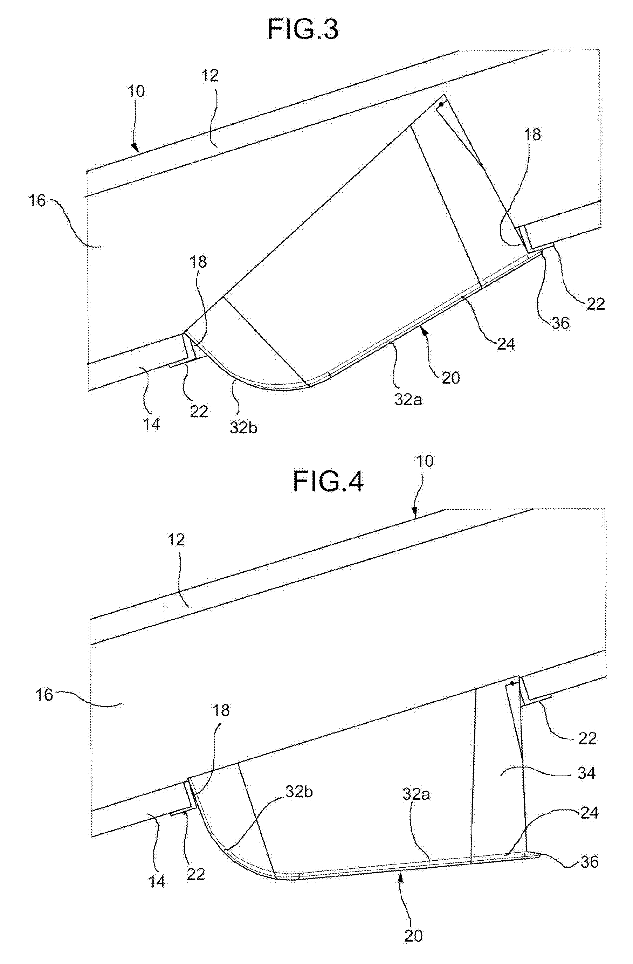

With reference first to Figures 3 and 4, a roof (only a portion of which is illustrated) of a building, in particular of a stable, is generally indicated 10. The roof 10 is inclined, about 30 degrees in the illustrated example, and includes an outer or upper part 12 and an inner or lower part 14 between which a chamber 16 is defined. Air can flow through the chamber 16 and thus be heated. The inner or lower part 14 of the roof has a plurality of openings 18 (only one of which is shown in Figures 3 and 4) through which hot air flowing in the chamber 16 can be delivered to the inside of the building. The air inflow through the openings 18 is controlled by respective ventilation inlets 20 (only one of which is shown in Figures 3 and 4) which can be adjusted, preferably continuously, between a fully closed position (Figure 3), in which air is prevented from flowing from the chamber 16 to the room below through the opening 18, and a fully open position (Figure 4), in which air is allowed to flow from the chamber 16 to the room below through the opening 18 at maximum flow.

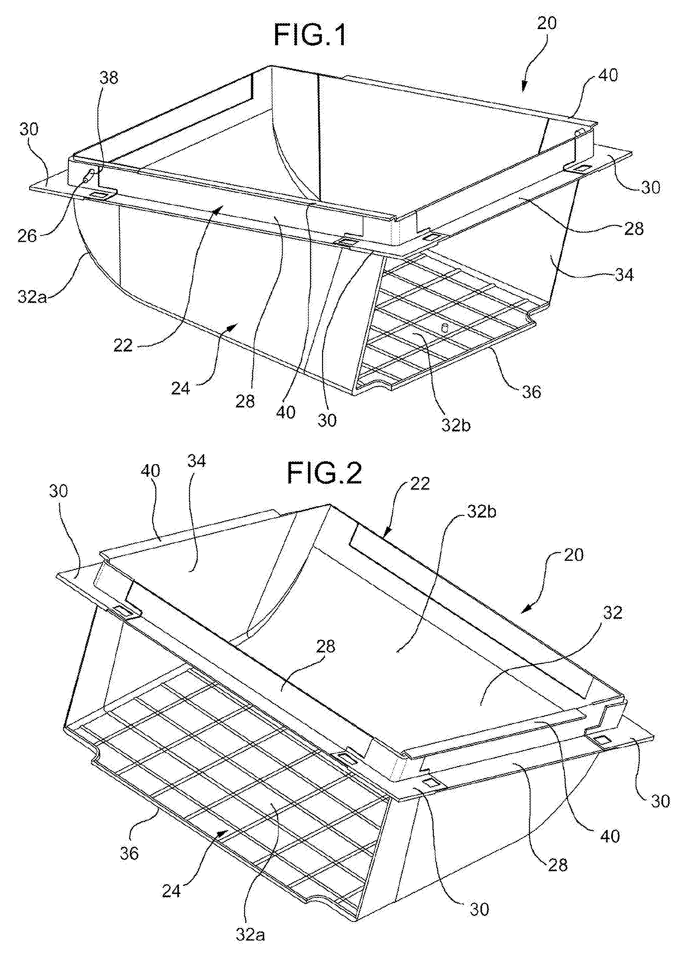

With reference now also to Figures 1 and 2, the ventilation inlet 20 comprises a frame 22 intended to be attached to the inner or lower part 14 of the roof, and a movable closing element 24 hinged to the frame 22 by means of a pair of articulation pins 26 (only one of which can be seen in Figure 1) so as to be able to rotate about a horizontal axis between the aforesaid fully open and fully closed positions.

The frame 22 is advantageously made of metal, in particular of aluminium, and is formed by four slats 28 connected to one another at their ends by means of angle connection elements 30 so as to form a structure having a generally rectangular shape and a perimeter substantially corresponding to that of the opening 18. Each slat 28 has a substantially L-shaped cross-section so that in the assembled condition (Figures 3 and 4) it abuts against the respective sides of the inner or lower part 14 of the roof defining the lower perimetrical edges of the opening 18.

The movable closing element 24 is advantageously made as a single piece of plastics having a generally shovel-like configuration, with a chute-shaped bottom wall 32 and a pair of vertical side walls 34. La bottom wall 32 comprises a substantially flat base portion 32a forming a closing free edge 36 arranged to abut against the frame 22 in the fully closed position (Figure 4), and a curved joining portion 32b extending upwards from the base portion 32a on the opposite side to the closing free edge 36. The articulation pins 26 of the movable closing element 24 are provided in an angle region of the side walls 34 adjacent to the top edge of the joining portion 32b and engage in respective slots 38 (one of which can be seen in Figure 1) formed in the two longer slats 28 of the frame 22.

In order to stop the rotational movement of the movable closing element 24 towards the open position, the top edges of the side walls form respective tabs 40 which are bent towards the outside and are arranged to abut against the top edges of the slats 28, as shown in Figures 1 and 2. As can be noticed from Figures 3 and 4, the top edges of the side walls 34 of the movable closing element 24 and the flat base portion 32a are not parallel to one another, but convergent towards the axis of rotation of the closing element 24 so as to define an angle substantially equal to or less than the angle of inclination of the roof. As a result, when the closing element 24 is in the fully open position (Figure 4) the flat base portion 32a is horizontal or slightly inclined upwards. The air flow discharged through the ventilation inlet 20 is not therefore directed downwards. At the same time, since the flat base portion 32a is vertically spaced from the articulation pins 26, i.e. from the axis of rotation of the closing element 24, the air flow which can pass through the ventilation inlet 20 is not significantly limited.

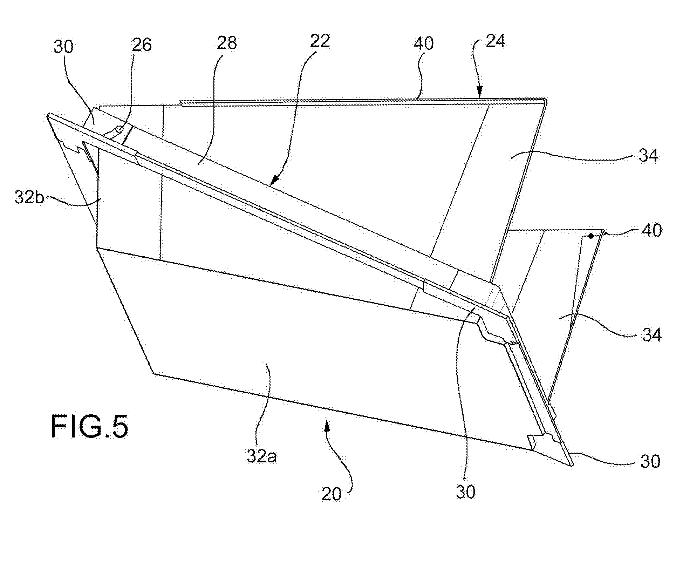

A variant of embodiment of the ventilation inlet according to the invention is illustrated in Figure 5, in which parts and elements identical or corresponding to those of Figures 1 to 4 have been given the same reference numerals. This variant of embodiment differs from the embodiment described above substantially only in that the joining portion 32b of the bottom wall 32 of the closing element 24 is straight rather than curved. Anyway, it offers the same advantages indicated above in connection with the preferred embodiment.

Naturally, the principle of the invention remaining unchanged, the embodiments and constructional details may vary widely with respect to those described and illustrated purely by way of a non-limiting example.

## Claims

1. Adjustable flow ventilation inlet (20) intended to be mounted on a pitched roof (10) of a building, in particular of a stable, to adjust air flow through an opening (18) provided in the roof (10), the inlet comprising a frame (22) intended to be attached to the roof (10) around the opening (18) and a movable closing element (24) hinged (26) to the frame (22) so as to be able to rotate about a horizontal axis between a fully closed position and a fully open position, wherein the movable closing element (24) has a bottom wall (32) comprising a substantially flat base portion (32a) which forms a closing free edge (36) arranged to abut against the frame (22) in the fully closed position,
**characterized in that** the bottom wall (32) of the movable closing element (24) further includes a joining portion (32b) extending upwards from the base portion (32a) on the opposite side to the closing free edge (36), and **in that** the closing element (24) is hinged to the frame (22) near a top edge of the joining portion (32b).

2. Ventilation inlet according to claim 1, wherein the closing element (24) further comprises a pair of vertical side walls (34) extending upwards from the bottom wall (32).

3. Ventilation inlet according to claim 2, wherein the top edges of the side walls (34) form bent tabs (40) arranged to co-operate with the frame (22) to stop the closing element (24) in the fully open position.

4. Ventilation inlet according to claim 3, wherein the top edges of the side walls (34) and the base portion (32a) of the bottom wall (32) of the closing element (24) converge towards the axis of rotation of the closing element (24) so as to form an angle equal to or less than the angle of inclination of the roof.

5. Ventilation inlet according to any of the preceding claims, wherein the joining portion (32b) of the closing element (24) is curved.

6. Ventilation inlet according to any of the preceding claims, wherein the closing element (24) is wholly made of plastics.

7. Ventilation inlet according to any of the preceding claims, wherein the frame (22) is made of metal, in particular aluminium.

8. Ventilation inlet according to any of the preceding claims, wherein the closing element (24) is provided with a pair of articulation pins (26) which engage in a corresponding pair of slots (38) provided in the frame (22) to define the axis of rotation of the closing element (24).

9. Ventilation inlet according to claims 2 and 8, wherein the articulation pins (26) are provided on the vertical side walls (34) of the closing element (24).
